(19) Europäisches Patentamt
European Patent Office
Office européen des brevets

(11) **EP 1 278 209 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(51) Int Cl.:
***G21K 1/06*** *(2006.01)*

(21) Anmeldenummer: **02012888.0**

(22) Anmeldetag: **11.06.2002**

(54) **Einrichtung und Verfahren zur Analyse atomarer und/oder molekularer Elemente mittels wellenlängendispersiver, röntgenspektrometrischer Einrichtungen**

Device and method for analysing of atomic and/or molecular elements with wavelength dispersive x-ray spectrometric devices

Dispositif et méthode pour analyser des elements atomiques et/ou moléculaires avec des appareils spectrometriques à rayons X à dispersion de longeur d'ondes

(84) Benannte Vertragsstaaten:
**DE FR GB NL**

(30) Priorität: **18.07.2001 DE 10134265**

(43) Veröffentlichungstag der Anmeldung:
**22.01.2003 Patentblatt 2003/04**

(73) Patentinhaber: **GKSS-Forschungszentrum Geesthacht GmbH**
**21502 Geesthacht (DE)**

(72) Erfinder:
• **Michaelsen, Carsten, Dr.**
**21502 Geesthacht (DE)**
• **Wiesmann, Jörg, Dr.**
**21335 Lüneburg (DE)**
• **Bormann, Rüdiger, Prof.**
**21224 Rosengarten (DE)**

(74) Vertreter: **UEXKÜLL & STOLBERG**
**Patentanwälte**
**Beselerstrasse 4**
**22607 Hamburg (DE)**

(56) Entgegenhaltungen:
**DE-A- 19 926 056     US-A- 5 485 499**

## Beschreibung

Die Erfindung betrifft eine Einrichtung zur Analyse atomarer und/oder molekularer Elemente mittels wellenlängendispersiver, röntgenspektrometrischer Einrichtungen, umfassend wenigstens eine eine Multilayerschicht aufweisende Spiegel- oder Fokussierungseinrichtung, insbesondere bei einer solchen Einrichtung, bei der von einer zu analysierenden Probe durch einfallende primäre Röntgenstrahlen oder Elektronenstrahlen induzierte Fluoreszenzstrahlen vor Auftreffen auf einem Meß- oder Analysedetektor auf die Spiegel- oder Fokussierungseinrichtung geleitet wird, wobei die Multilayerschicht durch wenigstens ein Schichtenpaar gebildet wird und wobei ein erstes Schichtelement des Schichtenpaares durch Lanthan gebildet wird, sowie ein derartiges Verfahren.

Einrichtungen und Verfahren der eingangs genannten Art, wie sie beispielsweise aus der DE-OS 199 26 36 bekannt sind, werden in der wissenschaftlichen Analytik aber auch im Bereich der industriellen Anwendung zum Nachweis atomar und/oder molekular vorliegender Elemente in den verschiedensten Anwendungsbereichen verwendet, z.B wenn es darauf ankommt, eben in einer zu untersuchenden bzw. zu analysierenden Probe in geringsten Mengen vorliegende Verunreinigungen oder auch Störungen in Proben zu analysieren bzw. nachzuweisen.

Dabei werden beispielsweise von einer Röntgen- oder Elektronenstrahlenquelle an sich beliebiger Art Röntgenoder Elektronenstrahlen auf eine Probe geleitet, wodurch als Teil der von der Probe dann reflektierten Strahlen Fluoreszenzstrahlen emittiert werden, die durch die einfallenden primären Röntgenstrahlen aufgrund an sich bekannter physikalischer Vorgänge induziert werden. Diese Fluoreszenzstrahlen werden vor dem Auftreffen auf eine Meß- oder Analyseanordnung, beispielsweise in Form eines fluoreszenzstrahlenselektiven Detektors zunächst auf einen geeignet ausgewählten Kristall gegeben, dort reflektiert und dann auf den Meß- oder Analysedetektor geführt. Diese Kristalle wirken als Analysatoren. Diese Kristalle, die künstlich hergestellt werden können, können aus dünnen, sich mehrfach regelmäßig abwechselnden Schichten zweier oder mehrerer Werkstoffe mit unterschiedlichen röntgenoptischen Eigenschaften bestehen. Daran wird, um in dem vorangehend aufgeführten Beispiel zu bleiben, die einfallenden Fluoreszenzstrahlen reflektiert, aber nur derjenige Anteil, für den die Bragg'sche Gleichung

$$n \; \lambda \; = \; 2d \; \sin \; \theta$$

erfüllt ist. Hierbei ist

$$\lambda \; (nm) \; = \; \frac{1,24}{E(keV)},$$

wobei n eine natürliche Zahl (n = 1, 2, 3, 4 ...), $\lambda$ die Wellenlänge des Röntgenlichtes, d die Periodizität (Gitterkonstante) des Analysatorkristalls, $2\theta$ der Beugungswinkel und E die Energie der Röntgenstrahlen ist. Eine Berücksichtigung des Effekts der Brechung, der für Röntgenstrahlen sehr klein ist, führt zu einer gegenüber der zuerst genannten modifizierten Gleichung, wobei sich aus den eingestellten Winkeln $\theta$ und der Gitterkonstante d des Analysators nach der ersten Gleichung bzw. deren Modifikation die Wellenlänge der reflektierten Röntgenstrahlen ergibt. Durch Variation des Winkels kann also die Wellenlänge der reflektierten Strahlen, im obigen Beispiels der Fluoreszenzstrahlen, in kontrollierter Weise ausgewählt werden.

Der große Vorteil der künstlichen Kristalle aus vielen sich regelmäßig abwechselnden Schichten, man spricht in diesem Zusammenhang auch von sogenannten Multilayerschichten, ist, daß man die Werkstoffe der Vielfachschicht hinsichtlich bestmöglicher Funktion auswählen und optimieren kann. Dieses ist ein wesentlicher Vorteil der künstlich hergestellten Multilayerschicht gegenüber natürlichen Kristallen.

Die Intensität der reflektierten Strahlung ist maßgeblich von den in der Multilayerschicht verwendeten Werkstoffen abhängig. Zusätzlich können die Gitterkonstanten der Multilayerschicht in weiteren Grenzen variiert werden als es in natürlichen Kristallen der Fall ist.

Ein besonderer Vorteil der als Analysatoren wirkenden Multilayerschicht ist der, daß damit die Analyse leichter Elemente bei gleichbleibender Intensität und ohne gesundheitsgefährdende Nebenwirkungen möglich ist.

Man hat bisher in vielen Fällen für speziell zu analysierende Elemente die Ausbildung der Multilayerschicht bzw. die einzelnen Schichten der Multilayerschicht auf das atomar bzw. molekular in einer zu untersuchenden Probe zu erwartende Element abgestimmt bzw. abgestellt.

Für den speziellen Fall des Energiebereiches um 100 bis 180 eV, also insbesondere für den Nachweis von Beryllium und Bor, wurden in der Vergangenheit Wolfram-Kohlenstoff-Vielfachschichten verwendet. Neuere Entwicklungen von Lanthan-Borkarbid-Vielfachschichten verbessern die Nachweisgrenze von Bor noch weiter, vgl. die eingangs genannte DE-OS 199 26 056. Für den Nachweis von Kohlenstoff bei Energien um 277 eV wurden Vielfachschichten aus Vanadium- bzw. Nickel-Kohlenstoff verwendet, siehe auch US-A-4 785 470.

Vielfachschichten, die für den Bor- und Berylliumnachweis hauptsächlich in Röntgenspektrometern eingesetzt werden ($Mo-B_4C$) oder die die besten Nachweisgrenzen ermöglichen ($La-B_4C$), haben für Kohlenstoff nur eine sehr geringe Reflektivität von 3 bis 0,9 %. Dies liegt daran, daß in dem leichten Schichtmaterial $B_4C$ mit Bor ein Element enthalten ist, dessen Absorptionskante bei einer Energie unterhalb der Kohlenstoffemissionslinie von 277 eV liegt. Deshalb wird die Kohlenstoffstrahlung von $B_4C$ enthaltenden Vielfachschichten extrem stark absorbiert. Die für den Kohlenstoffnachweis optimierten Vielfachschichten V-C und Cr-C sind hingegen für den Nachweis der leichten Elemente Beryllium und Bor nicht gut geeignet, weil deren Reflektivität im Vergleich zu den Lanthan beinhaltenden Vielfachschichten um mehr als einen Faktor 2 niedriger ist. Diese geringe Reflektivität ist für den Nachweis der leichten Elemente B und Be vor allem deshalb nicht ausreichend, weil die leichten Elemente eine deutlich geringere Fluoreszenzausbeute als die schweren aufweisen und damit die zu erwartenden Zählraten im Vergleich ohnehin sehr niedrig sind.

Für den Nachweis der leichten Elemente Beryllium bis Kohlenstoff mit möglichst hoher Reflektivität bei Energien von 108, 183 und 277 eV sind bisher wenigstens zwei verschiedene optimierte Vielfachschichten notwendig.

Es ist somit Aufgabe der vorliegenden Erfindung, eine Einrichtung und ein Verfahren zu schaffen, mit denen eine sehr stark verbesserte Röntgenanalyse für den Nachweis von Beryllium, Bor und Kohlenstoff möglich ist, wobei sowohl die Einrichtung als auch das Verfahren mit an sich im Stand der Technik bekannten Mitteln auf einfache Weise aufgebaut und betrieben werden kann, so daß bisherige Analyseeinrichtungen und bisherige Verfahren an sich in den Grundzügen beibehalten werden können und die Einrichtung und das Verfahren sowohl bei forschenden als auch industriellen Einrichtungen auf einfache Weise kostengünstig herstellbar und auf einfache Weise kostengünstig betreibbar sein sollen.

Gelöst wird die Aufgabe gemäß der erfindungsgemäßen Einrichtung dadurch, daß das zweite Schichtelement des Schichtenpaares durch Kohlenstoff gebildet wird.

Der Vorteil der erfindungsgemäßen Lösung besteht im wesentlichen darin, daß durch die erfindungsgemäße Kombination von Lanthan und Kohlenstoff als das Schichtenpaar bildende Schichtelemente in Multilayerschichten als wellenlängendispersive Analysatoren für Röntgenstrahlen im Energiebereich von 108 eV zum Nachweis von Beryllium, um 183 eV zum Nachweis von Bor und um 277 eV zum Nachweis von Kohlenstoff dienen. Die besonders günstigen röntgenoptischen Eigenschaften der Schichtelemente aus Lanthan und Kohlenstoff führen gegenüber den besten, bisher verwendeten, oben dargestellten, früheren Analysatoren beim Nachweis von Beryllium zu einer vergleichbaren, bei Bor zu einer geringfügig von $La-B_4C$ überbotenen und bei Kohlenstoff zu einer nur leicht schwächeren Reflektivität im Vergleich zu der bei optimierten Multilayerschichtkombinationen. Als einzige Materialkombination weist La-C hohe Reflektivitäten für alle drei Elemente Be, B und C gleichzeitig auf. Zudem führen La-C Multilayerschichten beim Bor-Nachweis aufgrund der Verwendung von Lanthan als schwerem Material (Reflektor) wie die $La-B_4C$-Vielfachschichten zu einer wesentlich verbesserten Unterdrückung sowohl der Sauerstoff-K- als auch der Silizium-L-Linien. Diese Unterdrückung ist auch für die C-Strahlung im Vergleich zu den Spezialspiegeln für den Kohlenstoff-Nachweis aus Ni-C- bzw. V-C-Schichtenpaaren deutlich verbessert.

Gemäß einer vorteilhaften Ausgestaltung der Einrichtung besteht die Multilayerschicht aus einer Anzahl von 1 bis 100 Schichtpaaren, d.h. aus 2 bis 200 Einzelschichten. Die Anzahl der Schichten bzw. Schichtpaare, die zur Ausbildung einer bestimmten Multilayerschicht gewählt wird, richtet sich im wesentlichen nach der zu lösenden Analyse bzw. Meßaufgabe und der in der zu untersuchenden Probe zu erwartenden Art und Menge der Verunreinigung.

Besonders vorteilhaft ist es, die Multilayerschicht derart aufzubauen, daß sie aus einer Anzahl von 40 bis 50 Schichtpaaren besteht, d.h. aus 80 bis 100 einzelnen Schichten.

Bei einer Grundversion der Einrichtung ist die Dicke der jeweiligen Multilayerschicht konstant, wobei es dabei aber auch möglich ist, die Dicke einer Schicht jedes Multilayerpaares gegenüber der anderen Schicht desselben Multilayerpaares unterschiedlich dick auszubilden.

Grundsätzlich wird bei den vorangehend dargestellten Ausführungsbeispielen gewährleistet, daß ein paralleler Fluoreszenzstrahl an der gesamten Fläche der Multilayerschicht mit maximaler Intensität reflektiert wird.

Bei einer noch anderen vorteilhaften Ausgestaltung der Einrichtung variiert die Dicke der jeweiligen Multilayerschicht über die Fläche, womit gewährleistet werden kann, daß nicht parallele Fluoreszenzstrahlen, die unter unterschiedlichen Winkeln auf die Multilayerschicht fallen, für die gewünschte Wellenlänge über die gesamte Fläche der Multilayerschicht mit maximaler Intensität reflektiert werden. Die Variation des Einfallswinkels $\theta$ wird hierbei, entsprechend der eingangs genannten ersten Gleichung oder deren berechnungskorrigierter Modifikation, durch eine Variation der Gitterkonstanten d kompensiert, so daß $\lambda$ konstant bleibt.

Vorteilhafterweise ist die Einrichtung dahingehend modifiziert, daß die Multilayerschicht gekrümmt ist oder bei einer noch anderen vorteilhaften Ausgestaltung, daß die Multilayerschicht auf einem flächigen Träger (Substrat) angeordnet ist, was aber bei allen Ausgestaltungen der Multilayerschicht möglich ist. Hierdurch wird gewährleistet, daß ein nicht paralleles Fluoreszenzstrahlenbündel, das an verschiedenen Positionen unter unterschiedlichen Winkeln auf die Multilayerschicht trifft, in seiner Strahlform beeinflußt werden kann, so daß beispielsweise ein auf die Multilayerschicht einfallendes divergentes Fluoreszenzstrahlenbündel in ein paralleles oder auch ein fokussiertes Fluoreszenzstrahlenbündel umgeformt werden kann. Auch kann es vorteilhaft sein, die Dicke der einzelnen Schichten der Multilayerschicht selbst wiederum unterschiedlich auszubilden, d.h. über die Fläche der Multilayerschicht in geeigneter Weise zu variieren, so daß die Multilayerschicht die gewünschte Wellenlänge der Fluoreszenzstrahlen des unter unterschiedlichen Winkeln auftreffenden Strahlenbündels über die gesamte Fläche mit maximaler Intensität reflektiert.

Es sind auch solche Kombinationen bei der Multilayerschicht denkbar, bei denen die eine Schicht des Multilayerpaares über die Fläche konstant dick ist, wohingegen die andere Schicht des Schichtpaares über die Fläche ihrer Dicke variiert.

Vorzugsweise liegt schließlich die Dicke der Schicht im Bereich von 1 bis 20 nm. Untersuchungen haben ergeben, daß bei derartigen Schichtdicken ein Höchstmaß an Reflektivität und Auflösungsvermögen mittels der Multilayerschicht erreicht werden kann.

Besonders vorteilhaft ist es, die Dicke der Schicht im Bereich von 8 nm auszubilden, ggf. bei einem Schichtdickenverhältnis von $\Gamma = 0{,}4$ und ggf. bei 100 Schichtpaaren.

Das Verfahren zur Analyse atomarer und/oder molekularer Elemente mittels wellenlängendispersiver, röntgenspektroskopischer Einrichtungen, umfassend wenigstens eine eine Multilayerschicht aufweisende Spiegel- oder Fokussierungseinrichtung, auf die primäre Röntgenstrahlung oder Fluoreszenzstrahlen geleitet werden, insbesondere derart, bei dem von einer zu analysierenden Probe durch einfallende primäre Röntgen- oder Elektronenstrahlen induzierte Fluoreszenzstrahlen vor Auftreffen auf einem Meß- oder Analysedetektor auf die Spiegel- oder Fokussierungseinrichtung geleitet werden, wobei die primären Röntgenstrahlen oder die Fluoreszenzstrahlen auf die aus wenigstens einem Schichtenpaar gebildeten Multilayerschicht geleitet werden und wobei ein erstes Schichtelement des Schichtenpaares durch Lanthan gebildet wird, ist dadurch gekennzeichnet, daß das zweite Schichtelement des Schichtenpaares durch Kohlenstoff gebildet wird.

|  | 109 eV (BE) | 183 eV (B) | 277 eV (C) |
|---|---|---|---|
| La-C | 22,3 % | 37,2 % | 37,4 % |
| Mo-B$_4$C | 18,3 % | 36,4 % | 3,0 % |
| La-B$_4$C | 23,7 % | 62,6 % | 0,9 % |
| V-C | 4,2 % | 14,6 % | 45,1 % |
| Cr-C | 6,1 % | 18,1 % | 45,2 % |

Theoretische Reflektivitäten von für den Be, B- und C-Nachweis optimierten Vielfachschichten (d = 8 nm, $\Gamma$ = 0,4 und 100 Schichtpaare)

Im übrigen gelten für das erfindungsgemäße Verfahren genau die Vorteile wie für die erfindungsgemäße Einrichtung angegeben, wobei auf diese obigen Vorteilsangaben bezug genommen wird.

Die Erfindung wird nun unter Bezugnahme auf die nachfolgenden schematischen Zeichnungen anhand eines Ausführungsbeispieles im einzelnen beschrieben. Darin zeigen:

Fig. 1    den von einer Röntgenstrahlenquelle ausgehenden Strahlenverlauf auf eine Probe, von dort auf zwei Multilayerspiegel und von dort auf eine Meß- oder Analyseeinrichtung (Detektor),

Fig. 2    den Verlauf der einfallenden und reflektierten Strahlen (hier im Beispiel Fluoreszenzstrahlen) auf die Multilayerschicht der erfindungsgemäßen Einrichtung, die auf einem Träger/Substrat aufgebracht ist,

Fig. 3    in Form einer graphischen Darstellung die Reflektivität einer La-C-Multilayerschicht, bestehend aus 100 Perioden, mit d = 8 nm und einem Schichtdickenverhältnis $\Gamma$ = 0,4 als Funktion des Winkels für Borstrahlung (183 eV), und

Fig. 4    in Form einer graphischen Darstellung die Reflektivität einer LA-C-Multilayerschicht, bestehend aus 100 Perioden, mit d = 8 nm und einem Schichtdickenverhältnis $\Gamma$ = 0,4 als Funktion des Winkels für Kohlenstoffstrahlung (277 eV).

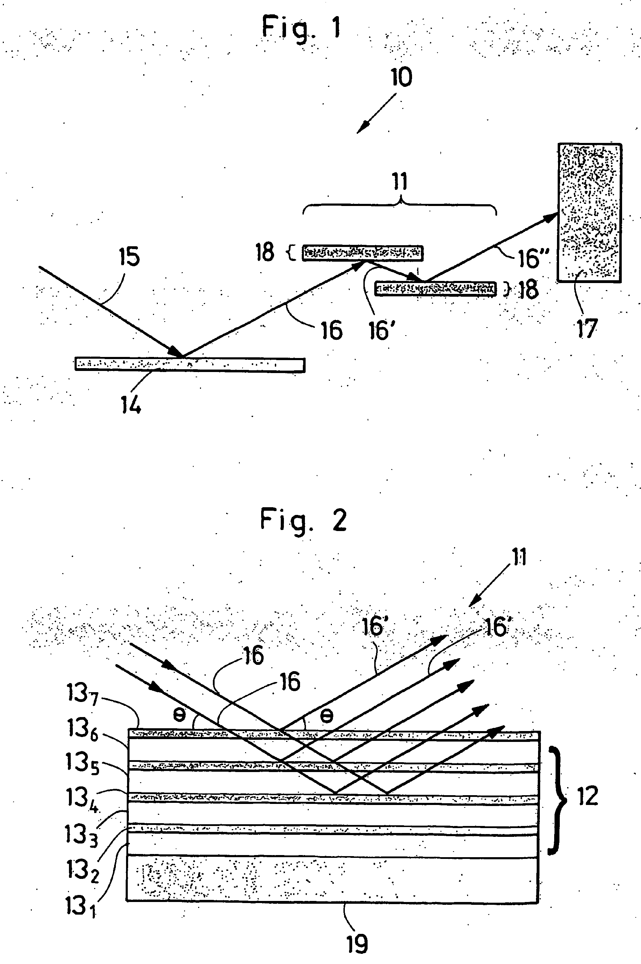

Es wird zunächst Bezug genommen auf die Darstellung von Fig. 1, die schematisch eine Einrichtung 10 zur Analyse atomarer und/oder molekularer Elemente zeigt, wie sie erfindungsgemäß beispielhaft realisiert und in vielen Anwendungsbereichen mit geringfügigen Abweichungen Anwendung findet.

Von einer hier nicht dargestellten Röntgen- oder Elektronenquelle werden primäre Röntgenstrahlen oder Elektronenstrahlen 15 abgegeben, die auf eine Probe 14 fallen, beispielsweise in Form eines Siliziumwafers, um Verunreinigungen im Siliziumwafer im Bereich der Oberfläche und im oberflächennahen Bereich nachzuweisen bzw. zu untersuchen. Aufgrund bekannter physikalischer Vorgänge werden Fluoreszenzstrahlen 16 als reflektierte Strahlen erzeugt, die in ihrem Strahlungskontinuum Informationen über die Art der im Siliziumwafer bzw. der Probe 14 enthaltenen zusätzlichen atomaren und/oder molekularen Elemente enthalten. Die Fluoreszenzstrahlen 16 werden auf eine Spiegel- oder Fokussierungseinrichtung 11 gegeben, die im Beispiel von Fig. 1 aus zwei durch jeweils eine Multilayerschicht 12 gebildete Spiegel- oder Fokussierungseinrichtungen 11 gebildet wird, die aber auch bei einer anderen Ausgestaltung der Einrichtung 10 nur aus einer Spiegel- oder Fokussierungseinrichtung 11 bestehen kann. Die von der Spiegeloder Fokussierungseinrichtung 11 reflektierten Fluoreszenzstrahlen 16' bzw. 16" werden auf eine Meß- oder Analyseanordnung (Detektor) 17 gegeben, mittels der auf an sich bekannte Weise quantitative und qualitative Aussagen über die Art der auf der Probe 14 anzutreffenden atomaren und/oder molekularen Elemente erfolgen können, die auf dem bzw. in dem die Probe 14 bildenden Werkstoff enthalten sein können.

In Fig. 2 ist beispielhaft ein Ausschnitt aus der Spiegel- oder Fokussierungseinrichtung 11 dargestellt, die die eigentliche Multilayerschicht 12, hier aufgebracht auf einem Träger bzw. Substrat 19, darstellt.

Die einzelnen Schichten $13_{1...n}$ bilden durch die Menge aller Paare $13_1$; $13_2$, $13_3$; $13_4$, $13_5$; $13_6$ usw. die Gesamtmultilayerschicht 12. Jede der Schichten pro Schichtenpaar wird aus einer La-Schicht und einer C-Schicht gebildet. Die Reihenfolge der Schichten pro Schichtenpaar kann grundsätzlich beliebig gewählt werden. Die erste Schicht $13_1$ eines Schichtenpaares kann beispielsweise Lanthan sein und die zweite Schicht $13_2$ Kohlenstoff, die erste Schicht 131 kann aber auch Kohlenstoff sein und die zweite Schicht $13_2$ Lanthan. Der einfallende Strahl, hier im Beispiel Fluoreszenzstrahlung 16, wird an jeder Grenzfläche eines Schichtenpaares reflektiert und verläßt als reflektierte Strahlen 16' die Spiegel- oder Fokussierungseinrichtung 11 und gelangt von dort entweder auf eine zweite Spiegel- oder Fokussierungseinrichtung 11, vergleiche Fig. 1 und von dort auf die Meß- oder Analyseeinrichtung 17, oder aber ohne nochmalige Reflexion an einer Spiegel- oder Fokussierungseinrichtung 11 direkt auf die Meß- und Analyseanordnung 17.

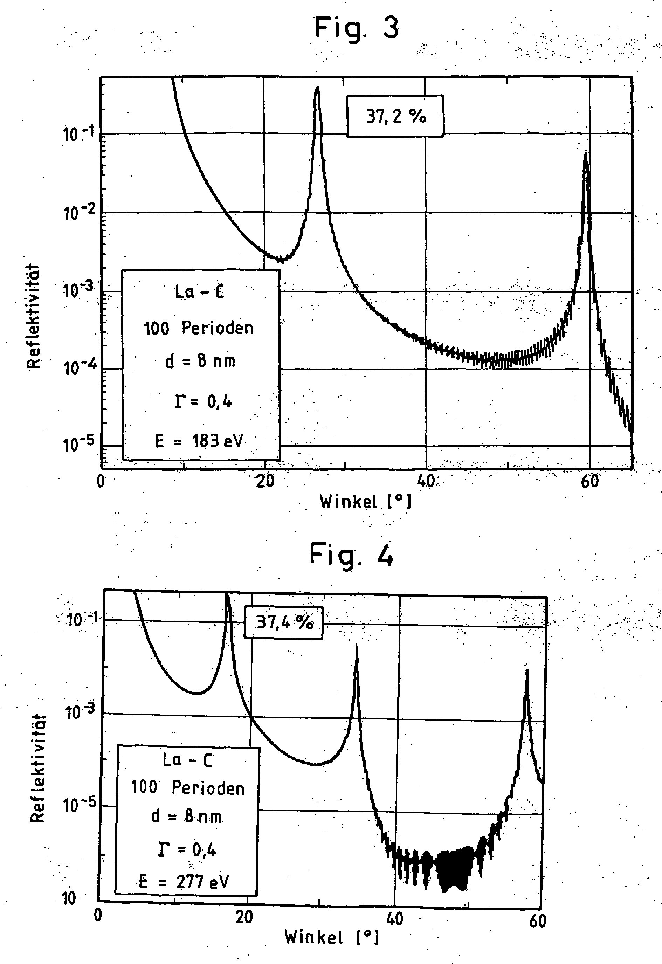

Aus Fig. 3 ist ersichtlich, daß die erfindungsgemäße Vielfachschicht (La-C-Vielfachschicht) aus den Figuren 3 (für die Boranalyse) und 4 (für die Kohlenstoffanalyse) sowie der oben dargestellten Tabelle Vorteile der erfindungsgemäßen Lösung auf augenscheinliche Weise ergeben. Dargestellt sind in den Figuren 3 und 4 die theoretischen Reflektivitäten eines idealen Multilayers mit einer Schichtdicke von d = 8 nm, einem Schichtdickenverhältnis von $\Gamma$ = 0,4 und 100 Schichtpaaren. Die La-C-Multilayerschicht weist für Beryllium und Bor nur gegenüber einer La-$B_4$C-Multilayerschicht eine geringere Reflektivität auf, jedoch gegenüber dem bisher für diese Elemente kommerziell erhältlichen Mo-$B_4$C eine deutlich höhere. Gegenüber diesem für den Be- und B-Nachweis optimalen Schichtsystem besitzt die La-C-Multilayerschicht jedoch auch für Kohlenstoff eine hohe Reflektivität, die nahezu die Werte der für C-Nachweis optimierten Multilayerschichten V-C bzw. Cr-C erreicht. Eine La-C-Multilayerschicht ist somit in bisher nicht möglicher Weise in der Lage, die Elemente Be-B und C mit einem einzigen Analysator zu messen. Hierdurch kann für Anwendungen, bei denen Be bzw. B und C gemessen werden sollen, auf einen Analysatorkristall verzichtet werden.

Das erfindungsgemäße Verfahren läuft gemäß dem oben im Zusammenhang mit der Darstellung von Fig. 1, die beispielhaft die erfindungsgemäße Einrichtung 10 zeigt, beschriebenen Strahlenverlauf von der nicht dargestellten Röntgen- oder Elektronenstrahlenquelle zur Meß- oder Analyseeinrichtung (Detektor) 17 ab.

Bezugszeichenliste

10 Einrichtung
11 Spiegel- oder Fokussierungseinrichtung
12 Multilayerschicht
13 (einzelne) Schicht
14 Probe
15 primäre (einfallende) Röntgenstrahlen
16 Fluoreszenzstrahlen
17 Meß- oder Analyseanordnung (Detektor)
18 Schichtdicke
19 Träger/Substrat

**Patentansprüche**

**1.** Einrichtung zur Analyse atomarer und/oder molekularer Elemente mittels wellenlängendispersiver, röntgenspektrometrischer Einrichtungen, umfassend wenigstens eine eine Multilayerschicht aufweisende Spiegel- oder Fokussierungseinrichtung, insbesondere für ein Verfahren, bei dem von einer zu analysierenden Probe durch einfallende primäre Röntgen- oder Elektronenstrahlen induzierte Fluoreszenzstrahlung vor Auftreffen auf einem Meß- oder Analysedetektor auf die Spiegel- oder Fokussierungseinrichtung geleitet wird, wobei die Multilayerschicht durch wenigstens ein Schichtenpaar gebildet ist und wobei ein erstes Schichtelement des Schichtenpaares durch Lanthan gebildet ist, **dadurch gekennzeichnet, daß** das zweite Schichtelement ($13_2$) des Schichtenpaares ($13_1$, $13_2$) durch Kohlenstoff gebildet ist.

2. Einrichtung nach Anspruch 1, **dadurch gekennzeichnet, daß** die Multilayerschicht (12) aus einer Anzahl von 1 bis 100 Schichtpaaren ($13_1$, $13_2$) besteht.

3. Einrichtung nach Anspruch 1, **dadurch gekennzeichnet, daß** die Multilayerschicht (12) aus einer Anzahl von 40 bis 50 Schichtpaaren ($13_1$, $13_2$) besteht.

4. Einrichtung nach einem oder mehreren der Ansprüche 1 bis 3, **dadurch gekennzeichnet, daß** die Dicke der jeweiligen Multilayerschicht (12) konstant ist.

5. Einrichtung nach einem oder mehreren der Ansprüche 1 bis 3, **dadurch gekennzeichnet, daß** die Dicke der jeweiligen Multilayerschicht (12) über die Fläche variiert.

6. Einrichtung nach einem oder mehreren der Ansprüche 1 bis 5, **dadurch gekennzeichnet, daß** die Multilayerschicht (12) gekrümmt ist.

7. Einrichtung nach einem oder mehreren der Ansprüche 1 bis 6, **dadurch gekennzeichnet, daß** die Multilayerschicht (12) auf einem flächigen Träger (19) angeordnet ist.

8. Einrichtung nach Anspruch 7, **dadurch gekennzeichnet, daß** der Träger (19) gekrümmt ist.

9. Einrichtung nach einem oder mehreren der Ansprüche 1 bis 8, **dadurch gekennzeichnet, daß** die Dicke der einzelnen Schichten (13) der Multilayerschicht (12) gleich ist.

10. Einrichtung nach einem oder mehreren der Ansprüche 1 bis 8, **dadurch gekennzeichnet, daß** die Dicke der einzelnen Schichten (13) der Multilayerschicht (12) unterschiedlich ist.

11. Einrichtung nach einem oder mehreren der Ansprüche 1 bis 10, **dadurch gekennzeichnet, daß** die Dicke der Schicht (13) im Bereich von 1 bis 20 nm liegt.

12. Einrichtung nach Anspruch 11, **dadurch gekennzeichnet, daß** die Dicke der Schicht (13) im Bereich von 8 nm liegt.

**Claims**

1. Device for the analysis of atomic and/or molecular elements by wavelengths dispersive X-ray spectrometric devices comprising at least a mirror or focusing device including a multilayer structure, in particular for a method in which fluorescence radiation emanating from a sample to be tested by exposure to primary X-ray or electron radiation is directed to the mirror or focusing device before impinging a measuring or analysis detector, wherein said multilayer structure comprises at least one layer pair and wherein a first layer element of the layer pair is formed by lanthanum, **characterized in that** the second layer element ($13_2$) of the layer pair ($13_1$, $13_2$) is formed by carbon.

2. Device according to claim 1, **characterized in that** the multilayer structure (12) consists of a number of 1 to 100 layer pairs ($13_1$, $13_2$).

3. Device according to claim 1, **characterized in that** the multilayer structure (12) consists of a number of 40 to 50 layer pairs ($13_1$, $13_2$).

4. Device according to any of claims 1 to 3, **characterized in that** the particular multilayer structure (12) has a uniform thickness.

5. Device according to any of claims 1 to 3, **characterized in that** the particular multilayer structure (12) has a thickness which varies over the surface of the layer.

6. Device according to any of claims 1 to 5, **characterized in that** the multilayer structure (12) is curved.

7. Device according to any of claims 1 to 6, **characterized in that** the multilayer structure (12) is disposed on the surface of a plane substrate (19).

8. Device according to claim 7, **characterized in that** the substrate (19) is curved.

9. Device according to any of claims 1 to 8, **characterized in that** the thicknesses of the individual layers (13) of the multilayer structure (12) are the same.

10. Device according to any of claims 1 to 8, **characterized in that** the thicknesses of the individual layers (13) of the multilayer structure (12) are different.

11. Device according to any of claims 1 to 10, **characterized in that** the thickness of the layer (13) is in the range of 1 to 20 nm.

12. Device according to claim 11, **characterized in that** the thickness of the layer (13) is in the range of 8 nm.

**Revendications**

1. Dispositif pour analyser des éléments atomiques et/ou moléculaires avec des appareils spectrométriques à rayons X à dispersion de longueur d'ondes, comprenant au moins un système de miroirs ou de focalisation multicouches, en particulier pour un procédé dans lequel un rayon fluorescent induit par un échantillon à analyser grâce à des rayons X ou électroniques primaires incidents est dirigé sur le système de focalisation ou de miroirs avant de rencontrer un détecteur de mesure ou d'analyse, où la multicouche est formée d'au moins une paire de couches et où un premier élément stratifié de la paire de couches est formé par le lanthane, **caractérisé en ce que** le deuxième élément stratifié ($13_2$) de la paire de couches ($13_1$, $13_2$) est formé par le carbone.

2. Dispositif selon la revendication 1, **caractérisé en ce que** la multicouche (12) se compose d'un nombre de 1 à 100 paires de couches ($13_1$, $132_)$.

3. Dispositif selon la revendication 1, **caractérisé en ce que** la multicouche (12) se compose d'un nombre de 40 à 50 paires de couches ($13_1$, $13_2$).

4. Dispositif selon l'une ou plusieurs des revendications 1 à 3, **caractérisé en ce que** l'épaisseur de chaque multicouche (12) est constante.

5. Dispositif selon l'une ou plusieurs des revendications 1 à 3, **caractérisé en ce que** l'épaisseur de chaque multicouche (12) varie sur la surface.

6. Dispositif selon l'une ou plusieurs des revendications 1 à 5, **caractérisé en ce que** la multicouche (12) est courbée.

7. Dispositif selon l'une ou plusieurs des revendications 1 à 6, **caractérisé en ce que** la multicouche (12) est disposée sur un support surfacique (19).

8. Dispositif selon la revendication 7, **caractérisé en ce que** le support (19) est courbé.

9. Dispositif selon l'une ou plusieurs des revendications 1 à 8, **caractérisé en ce que** l'épaisseur des différentes couches (13) de la multicouche (12) est identique.

10. Dispositif selon l'une ou plusieurs des revendications 1 à 8, **caractérisé en ce que** l'épaisseur des différentes couches (13) de la multicouche (12) est différente.

11. Dispositif selon l'une ou plusieurs des revendications 1 à 10, **caractérisé en ce que** l'épaisseur de la couche (13) se situe entre environ 1 à 20 nm.

12. Dispositif selon la revendication 11, **caractérisé en ce que** l'épaisseur de la couche (13) se situe à environ 8 nm.

Fig. 1

Fig. 2

# Fig. 3

Reflektivität

37,2 %

La – C
100 Perioden
d = 8 nm
Γ = 0,4
E = 183 eV

Winkel [°]

# Fig. 4

Reflektivität

37,4 %

La – C
100 Perioden
d = 8 nm
Γ = 0,4
E = 277 eV

Winkel [°]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1992636 A
- DE 19926056 A
- US 4785470 A